# EUROPÄISCHE PATENTANMELDUNG

(11) **EP 1 167 893 A2**
(43) Veröffentlichungstag der Anmeldung: **02.01.2002**
(21) Anmeldenummer: 01113535.7
(22) Anmeldetag: 12.06.2001
(51) Int. Cl.: F24J 2/40, F24J 2/46, F24J 2/24

(54) **Vorrichtung zum Erwärmen oder Kühlen eines fluiden Mediums, insbesondere Sonnenkollektor, sowie Ventil zum Einsatz in einer solchen Vorrichtung**

(30) Priorität: 19.06.2000 DE 10030112
(71) Anmelder: Müller, Friedrich Udo, 74074 Heilbronn (IT)
(72) Erfinder: Müller, Friedrich Udo, 74074 Heilbronn (IT)
(74) Vertreter: von Hellfeld, Axel, Dr. Dipl.-Phys.

(57) **Zusammenfassung**

Bei Sonnenkollektoren des Standes der Technik fließt eine durch Sonneneinstrahlung zu erwärmende Flüssigkeit in eine Einspeiseleitung, von dieser in eine erste Gruppe von Absorberelementen, dann in eine Umlenkleitung, und von dieser über eine zweite Gruppe von Absorberelementen in die Verteilerleitung zurück und zu einer Aufnahmeleitung. Die Verteilerleitung weist in der Mitte eine Dichtung auf, so daß sämtliche Flüssigkeit durch die Absorberelemente strömt.

Ein Nachteil tritt auf, wenn mehrere Sonnenkollektoren hintereinander geschaltet werden, weil dann die gesamte Flüssigkeit die Absorberelemente in allen Sonnenkollektoren durchströmt, so daß die Durchströmungsgeschwindigkeit entsprechend hoch sein muß oder die Querschnitte der Absorberelemente vergrößert werden müssen. Um dies zu vermeiden, sieht die Erfindung zwischen der Einspeiseleitung (14, 18) und der Aufnahmeleitung (26, 16) einen Durchfluß (32) mit einem Querschnitt derart vor, daß ein bestimmter Anteil der Flüssigkeit direkt ohne den Umweg über ein Absorberelement (20, 24) von der Einspeiseleitung (14, 18) zur Aufnahmeleitung (26, 16) fließen kann.

## Beschreibung

Die Erfindung betrifft eine Vorrichtung zum Erwärmen oder Kühlen eines fluiden Mediums, insbesondere einen Sonnenkollektor, mit mindestens einem Absorber-/Radiatorelement, einer Einspeiseleitung zum Einspeisen des fluiden Mediums in das mindestens eine Absorber-/Radiatorelement und einer stromabwärts hinter dem mindestens einen Absorber-/Radiatorelement angeordneten Aufnahmeleitung zum Aufnehmen des durch das mindestens eine Absorber-/Radiatorelement geleiteten fluiden Mediums.

Bei Sonnenkollektoren wird eine Flüssigkeit dadurch erwärmt, daß sie durch Absorberelemente geleitet wird, die die Strahlung der Sonne absorbieren und die Wärme auf die durch sie fließende Flüssigkeit übertragen.

Gebräuchlich sind Sonnenkollektoren mit vier Flüssigkeitsanschlüssen, nämlich zwei Eintrittsöffnungen und zwei Austrittsöffnungen.

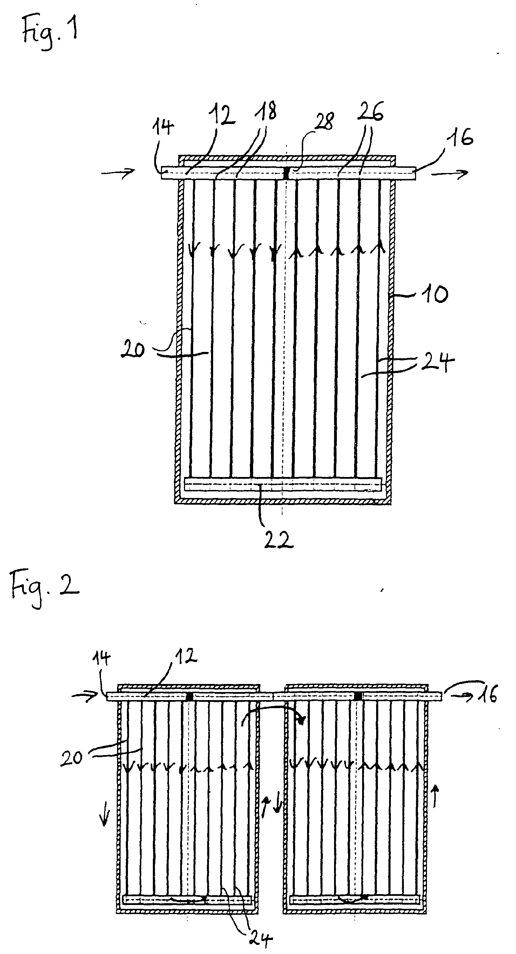

Bekannt sind aber auch Sonnenkollektoren, die nur zwei Flüssigkeitsanschlüsse aufweisen, nämlich eine Eintrittsöffnung und eine Austrittsöffnung. Ein derartiger Sonnenkollektor ist in Figur 1 dargestellt:

In einem Gehäuse 10 ist oben eine Verteilerleitung 12 (ein Rohr) angeordnet, die das Gehäuse 10 an zwei Stellen durchdringt, wodurch eine Eintrittsöffnung 14 und eine Austrittsöffnung 16 gebildet werden. Eine Flüssigkeit (z. B. Wasser), die durch die Eintrittsöffnung 14 in die Verteilerleitung 12 eintritt, gelangt zunächst in einen Flüssigkeitsabgabebereich 18. Eintrittsöffnung 14 und Flüssigkeitsabgabebereich 18 bilden eine Einspeiseleitung des Sonnenkollektors. Der Flüssigkeitsabgabebereich 18 weist Öffnungen auf, die die Verteilerleitung 12 mit Rohren 20 verbinden (in Fig. 1 sind dies fünf Stück), auf die Absorberbleche aufgeschweißt sind. Die Flüssigkeit fließt durch die Rohre 20 zu einer Umlenkleitung 22, die sich im unteren Teil des Sonnenkollektors befindet. Von dieser Umlenkleitung 22 führen Rohre 24 weg (in Fig. 1 sind dies ebenfalls fünf Stück), die mit einem Flüssigkeitsaufnahmebereich 26 der Verteilerleitung 12 verbunden sind. Die Flüssigkeit fließt also über die Umlenkleitung 22 durch die Rohre 24 zu der Verteilerleitung 12 zurück. Schließlich tritt sie aus der Austrittsöffnung 16 des Sonnenkollektors aus. Flüssigkeitsaufnahmebereich 26 und Austrittsöffnung 16 bilden eine Flüssigkeitsaufnahmeleitung des Sonnenkollektors.

Damit die Flüssigkeit vollständig durch die Absorberelemente, d. h. die Rohre 20 und 24 fließt, ist der Abgabebereich (18) vom Aufnahmebereich (26) getrennt. Zum Beispiel kann das Rohr zusammengepreßt, getrennt ausgeführt oder mit einer Dichtung (einem Verschluß) versehen sein. Diese Dichtung 28 trennt den Flüssigkeitsabgabebereich 18 von dem Flüssigkeitsaufnahmebereich 26 vollständig ab. Die Dichtung oder auch die eingepreßte Version weist gelegentlich eine kleine Öffnung auf. Die kleine Öffnung in der Dichtung 28 ermöglicht es, daß in der Verteilerleitung 12 befindliche Luft von einer Seite der Verteilerleitung 12 in die andere Seite gelangen kann und von dort aus dem Sonnenkollektor austritt. Sie erlaubt es jedoch nicht, daß nennenswert Wasser bzw. Fluid durch sie tritt. Nach kurzer Betriebszeit ist diese kleine Öffnung in der Regel ohnehin verstopft. Die Luft ist zu diesem Zeitpunkt schon ausgetreten.

Der in Fig. 1 dargestellte Sonnenkollektor hat gegenüber Sonnenkollektoren mit vier Flüssigkeitsanschlüssen den Vorteil, daß die Kosten bei der Herstellung reduziert werden, der Montageaufwand vereinfacht wird, und daß die Gefahr der Undichtigkeit der Anschlüsse um die Hälfte reduziert wird.

Als nachteilig erweist sich dieser Sonnenkollektor jedoch, wenn mehrere Sonnenkollektoren in Reihe geschaltet werden. Da die Flüssigkeit in jedem Sonnenkollektor durch eines der Rohre 20 und anschließend durch eines der Rohre 24 fließen muß, vervielfacht sich die Zahl der durchflossenen Rohre mit der Zahl der Sonnenkollektoren. Beispielsweise durchfließt die Flüssigkeit bei zwei hintereinandergeschalteten Sonnenkollektoren, wie sie in Figur 2 gezeigt sind, insgesamt vier Rohre. Bei drei hintereinandergeschalteten Sonnenkollektoren sind dies sechs Rohre, bei vier hintereinandergeschalteten Sonnenkollektoren acht Rohre. Wegen der hohen Zahl der durchflossenen Rohre muß daher die Durchströmungsgeschwindigkeit und damit die Leistung der Pumpe, die das Wasser durch die Rohre treibt, erheblich erhöht werden. Auch die Rohrquerschnitte müssen im Vergleich zu anderen Sonnenkollektoren vergrößert werden. Die Gesamtleistung des Kollektorfeldes aus mehreren Sonnenkollektoren sinkt, da die Flüssigkeit bei der Durchströmung durch jeden einzelnen Kollektor Wärme aufnimmt, so daß mit jedem zusätzlichen Kollektor immer weniger Wärme aufgenommen werden kann. Insgesamt können wesentlich weniger Kollektoren in Serie geschaltet werden als bei Sonnenkollektoren mit vier Anschlüssen.

Es ist Aufgabe der vorliegenden Erfindung eine Vorrichtung der eingangs genannten Gattung, insbesondere einen Sonnenkollektor mit nur zwei Flüssigkeitsanschlüssen bereitzustellen, bei dem die oben genannten Probleme nicht oder in nur geringerem Maße auftreten.

Zur Lösung dieser Aufgabe schlägt die Erfindung vor, zwischen der Einspeiseleitung und der Aufnahmeleitung einem Durchfluß vorzusehen mit einem Querschnitt derart, daß ein bestimmter Anteil des fluiden Mediums (z.B. einer Flüssigkeit oder eines Gases) direkt ohne den Umweg über ein Absorberelement zur Aufnahme von Wärme oder ein Radiatorelement zur Abgabe von Wärme von der Eintrittsöffnung zur Austrittsöffnung fließen kann.

Im Falle von einem entsprechend abgewandelten Sonnenkollektor gemäß Fig. 1 fließt dieser bestimmte Anteil des fließenden Mediums demzufolge nicht durch die Rohre 20 und 24, sondern er wird im Flüssigkeitsaufnahmebereich 26 mit dem Medium vermischt, das die Rohre 20 und 24 durchflossen hat. Dadurch verringert sich der Anteil des Mediums (im folgenden: des Wassers), die durch die Rohre 20 und 24 fließt, und die Probleme der hohen Durchströmungsgeschwindigkeit und der damit erforderlichen höheren Pumpenleistung sowie des erforderlichen größeren Rohrquerschnitts treten nicht oder zumindest in deutlich geringerem Maße auf.

Je größer der Querschnitt des Durchflusses ist, desto weniger Wasser fließt durch die Rohre 20 und 24. Der Durchfluß kann beispielsweise auch einen Querschnitt von wenigstens 10 %, wenigstens 20 %, wenigstens 30 % oder sogar wenigstens 40 % des durchschnittlichen Querschnitts der Einspeiseleitung und/oder der Aufnahmeleitung aufweisen.

Der durchschnittliche Querschnitt ist hier der Durchschnitt der Einspeiseleitung oder der Aufnahmeleitung über deren wesentlichen Bereich, d. h. im Falle von Figur 1 über den Flüssigkeitsabgabebereich und über den Flüssigkeitsaufnahmebereich. Der Durchschnitt kann auch über die Gesamtheit von Einspeiseleitung und Aufnahmeleitung ermittelt werden. Im bevorzugten Fall bilden die Einspeiseleitung und die Aufnahmeleitung gemeinsam die Verteilerleitung 12, die z.B. ein Rohr mit im wesentlichen konstantem Querschnitt ist, so daß das Ermitteln des Durchschnitts des Querschnitts vereinfacht wird.

Sollen genau zwei Vorrichtungen hintereinander geschaltet werden, so ist es günstig, wenn der Durchfluß einen Querschnitt von ungefähr 50 % des durchschnittlichen Querschnitts der Verteilerleitung aufweist. In diesem Fall fließt genau die Hälfte des Wassers durch die Rohre 20, 24 der ersten Vorrichtung, und die andere Hälfte fließt direkt weiter zu der zweiten Vorrichtung. Die Durchflußgeschwindigkeit des Wassers erreicht dann wieder den Wert, den sie bei einer einzelnen Vorrichtung oder auch bei zwei Vorrichtungen mit je vier Anschlüssen hätte.

Dasselbe tritt ein, wenn im Falle, daß z.B. drei Sonnenkollektoren hintereinander geschaltet werden, der Durchfluß einen Querschnitt von ungefähr zwei Dritteln des durchschnittlichen Querschnitts der Verteilerleitung aufweist. Im Falle von vier hintereinander geschalteten Sonnenkollektoren ist es günstig, wenn der Durchfluß einen Querschnitt von ungefähr drei Vierteln des durchschnittlichen Querschnitts der Verteilerleitung aufweist. Bei n hintereinander geschalteten Sonnenkollektoren ist es günstig, wenn der Durchfluß einen Querschnitt von ungefähr (n-1)/n des durchschnittlichen Querschnitts der Verteilerleitung aufweist.

Wie die vorstehenden Betrachtungen zeigen, wird hier der Begriff "Querschnitt des Durchflusses" bevorzugt so verstanden, daß er die Aufteilung der Wasserströmung auf zwei Strömungswege definiert: Zum einen strömt ein Anteil des Wassers durch die Absorberröhre und zum anderen strömt ein Teil des Wassers direkt durch die Vorrichtung zur nächsten Vorrichtung (Kollektor). Die vorstehend abgehandelten Prozentangaben und die Angaben über Anteile der Strömung betreffen nicht notwendig den Querschnitt des Durchflusses in Quadratmillimeter sondern die Wirkung des Querschnittes auf die Strömungsverteilung.

Es kann vorgesehen sein, daß der Durchfluß fest eingestellt ist. Beispielsweise kann der Durchfluß so gebildet sein, daß in der Verteilerleitung, die ein durchgehendes Rohr bildet, ein Inneneinsatz eingebaut wird, der den Querschnitt der Verteilerleitung an dieser Stelle reduziert. Der Einsatz kann ein in der Verteilerleitung angeordnetes Innenrohr bzw. eine durchgehende Bohrung umfassen, und er wird mittels einer Dichtung in der Verteilerleitung befestigt, so daß der Querschnitt des Innenrohrs den Querschnitt des Durchflusses bestimmt. Anstelle eine Dichtung zu verwenden, kann der Einsatz eingepreßt, verlötet, geschweißt oder eingeklebt sein. Der Durchfluß kann auch durch eine Scheibe mit einer entsprechend großen Bohrung definiert sein, die in die Verteilerleitung eingepaßt ist. Eine Scheibe hat allerdings den Nachteil, daß wegen der Druckverhältnisse das innere Loch sehr klein sein müßte, was die Gefahr mit sich bringt, daß das Loch mit Schmutzteilchen verstopft werden kann. Verwendet man statt einer Scheibe einen längeren Einsatz, so tritt das Problem nicht auf. Dieser längere Einsatz kann in seiner einfachsten Ausführungsform durch einen massiven Körper gebildet sein, der im wesentlichen die Form eines dickwandigen Rohres hat, dessen Außendurchmesser genau in die Verteilerleitung paßt, und dessen dicke Wände die Reduzierung des Querschnitts der Verteilerleitung bewirken. Da das Wasser durch einen längeren Einsatz fließen muß, hat das Loch in diesem Einsatz einen größeren Durchflußwiderstand und kann im Vergleich zur Scheibe wesentlich größer ausgelegt werden, wodurch die Gefahr des Verstopfens dann deutlich verringert wird. Gemäß einer vorteilhaften Ausführungsform läßt sich der Durchflußwiderstand weiter erhöhen, indem man das innere Loch des Einsatzes nicht geradlinig verlaufend ausführt, sondern eine Windung vorsieht, beispielsweise ist eine Wendelform möglich, oder auch eine Treppenform. Der Durchflußwiderstand kann auch durch geeignete Wahl des Materials, das den Einsatz bildet, erhöht werden, z.B. hat Gummi einen hohen Reibungswiderstand. Gelegentlich kann es notwendig sein, daß zur ausreichenden Erhöhung des Durchflußwiderstandes der Einsatz so lang ausgelegt wird, daß er beispielsweise bei dem in Fig. 1 dargestellten Sonnenkollektor die Öffnungen des Flüssigkeitsabgabebereichs 18 verschließen würde, die die Verteilerleitung 12 mit Rohren 20 verbinden und/oder verhindern würde, daß Flüssigkeit durch die Rohre 24 in die Verteilerleitung 12 zurück fließt. In diesem Falle kann der Einsatz dadurch verlängert werden, daß an ein massives Teil, das in die Verteilerleitung angepaßt ist, auf einer Seite oder beiden Seiten ein Rohr angefügt wird, dessen Innendurchmesser der Öffnung bzw. Bohrung des Einsatzes entspricht, dessen Außendurchmesser aber geringer ist als der Innendurchmesser der Verteilerleitung, so daß die Flüssigkeit am Rohr vorbei fließen kann. Das Rohr kann dann in den Flüssigkeitsabgabebereich 18 und den Flüssigkeitsaufnahmebereich 26 hinein ragen, ohne daß die Zirkulation der Flüssigkeit durch die Rohre 20 und 24 behindert wird.

Um flexibel zu sein, kann eine erfindungsgemäße Vorrichtung mit einem festen Einsatz der oben beschrieben Art ausgestattet werden, der einen etwas größeren Querschnitt für den Durchfluß definiert. Sollte dann ein kleinerer Querschnitt des Durchflusses notwendig sein, wenn nur wenige Vorrichtungen miteinander verbunden werden, so wird der Einsatz durch ein weiteres Reduzierstück, das in das Loch des Einsatzes einbringbar (z.B. einschraubbar) ist, weiter reduziert. Auch das Reduzierstück kann die Form eines Röhrchens haben. In diesem Falle ist es besonders vorteilhaft, wenn der Einsatz über die Öffnungen der erfindungsgemäßen Vorrichtung (z.B. bei dem Sonnenkollektor aus Fig. 1 die Eintrittsöffnung 14 und/oder die Austrittsöffnung 16) zugänglich ist, damit das weitere Reduzierstück auf einer Baustelle schnell in den Einsatz eingesetzt werden kann.

Eine weitere Möglichkeit, den Durchfluß fest einzustellen, ist es, den Querschnitt durch Eindrücken des Rohres zwischen dem Abgabebereich 18 und dem Aufnahmebereich 26 zu bestimmen (zu definieren). Weiter könnten die Einspeiseleitung und die Aufnahmeleitung voneinander getrennte Leitungen sein und nur durch ein dünnes Rohr verbunden sein, dessen Innendurchmesser dann den Durchfluß definiert.

Das oben bereits angesprochene Problem, die Druckverhältnisse so zu optimieren, daß der Durchfluß größer ausgelegt werden kann, läßt sich auch durch zwei andere konstruktive Maßnahmen lösen:

Erstens kann man das Verteilerrohr so gestalten, daß seine zweite Hälfte, also die Austrittsseite (in Fig. 1 der Flüssigkeitsaufnahmebereich 26) einen geringeren Durchmesser als die erste Hälfte, die Eintrittsseite (also in Fig. 1 der Flüssigkeitsabgabebereich 18) hat. Dadurch wird der Pumpendruck auf der Eintrittsseite geringer als auf der Austrittseite, es fließt durch einen Durchfluß bestimmte Größe weniger Flüssigkeit als bei gleichen Durchmessern auf Eintritts- und Austrittsseite.

Zum zweiten ist es möglich, bei der in Fig. 1 dargestellten Ausführungsform mehr Rohre 20 vorzusehen als Rohre 24 vorhanden sind, oder man wählt für die Rohre 20 einen größeren Durchmesser als für die Rohre 24. Auch dadurch wird der Pumpendruck auf der Eintrittsseite geringer als auf der Austrittsseite, und der Durchfluß kann größer ausgelegt werden als ohne diese konstruk-tive Maßnahme.

Da der Durchfluß bevorzugt je nachdem variieren sollte, wie viele Sonnenkollektoren hintereinander geschaltet werden, wie oben ausgeführt, ist es vorteilhaft, wenn der Durchfluß nicht fest, wie bisher beschrieben, sondern variabel ist. Er kann insbesondere vorteilhafterweise mittels eines Ventils zumindest teilweise geöffnet und geschlossen werden, und am besten wird der Querschnitt des Durchflusses mittels des Ventils in Stufen oder stufenlos gesteuert.

Als Ventil kann ein von außen betätigbares Ventil vorgesehen sein. Gemäß einer bevorzugten Ausführungsform reguliert sich das Ventil aufgrund des Flüssigkeitsdrucks in der Durchlaßöffnung selbst. Ein solches Ventil kann beispielsweise federbelastet sein, und die Feder gibt je nach Durchströmungsdruck,-menge und -geschwindigkeit entsprechend nach. Der optimale Querschnitt des Durchflusses stellt sich dann von Kollektor zu Kollektor selbst ein.

Gemäß einem weiteren Aspekt der Erfindung wird ein derartiges Ventil bereitgestellt, das bei der erfindungsgemäßen Vorrichtung verwendet werden kann, um den Durchfluß zu definieren. Diese.Ventil weist ein Randteil auf, das einen Durchlaß definiert und am besten so geformt ist, daß es genau in eine Fluidleitung paßt, in der es verwendet werden soll. Ferner hat das Ventil mindestens ein Federelement, das in einer Ruhestellung den Durchlaß zumindest teilweise verschließt und so eine erste Strömungsquerschnittsfläche definiert und in einer Auslenkstellung den Durchlaß weniger verschließt als in der Ruhestellung und so eine zweite Strömungsquerschnittsfläche definiert, die größer als die erste Strömungsquerschnittsfläche ist. Das Federelement ist unter Fluiddruck in eine oder mehrere Stellungen zwischen der Ruhestellung und der Auslenkstellung bewegbar, so daß beim Betrieb des Ventils Strömungsquerschnittsflächen zwischen der ersten und der zweiten Strömungsquerschnittfläche auftreten können, d.h. durch das Federelement definiert/bestimmt werden können. Vorteilhaft geschieht dies stufenlos, wobei die erste Strömungsquerschnittsfläche durchaus von Null verschieben sein kann, weil ja bei der erfindungsgemäßen Vorrichtung auf jeden fall ein Mindestdurchfluß definiert sein soll und das Ventil in diesem Zustand in seiner Ruhestellung sein kann.

Das Federelement ist vorteilhaft am Randteil befestigt, möglicherweise sogar einstückig mit diesem gebildet, beispielsweise durch Ausstanzen des Ventils aus einem geeignetem Material wie Metall, Kunststoff oder auch Gummi. Das Federelement kann eine Wirkfläche haben, die über einen Hals mit dem Randteil verbunden ist. Wirkfläche ist dabei die Fläche, auf die das Fluid einwirkt, d.h. einen Druck ausübt derart, daß das Federelement bewegt wird. Diese Definition soll jedoch nicht ausschließen, daß auch auf den Hals ein gewisser Druck ausgeübt wird. Gelegentlich ist der Übergang von Wirkfläche zum Hals fließend, vorteilhaft ist der Hals aber etwas schmäler als die Wirkfläche an der Stelle, an der sie mit dem Hals verbunden ist. Die Wirkfläche kann im wesentlichen dieselbe Form wie der Durchlaß haben (muß natürlich geringfügig kleiner sein) bzw. eine Form haben, die an die Form des Durchlasses angepaßt ist. Dies gilt besonders, wenn nur ein einziges Federelement vorgesehen ist. Vorteilhaft sind dann Durchlaß und Wirkfläche kreisförmig.

Es kann auch eine Vielzahl von Federelementen vorgesehen sein, die eine im wesentlichen dreieckige Wirkfläche haben. Werden die Federelemente mit dem Hals an der Außenkontur des Durchlasses befestigt, so läßt sich der Durchlaß mit Hilfe der dreieckigen Wirkflächen nahezu vollständig verschließen. Ist der Durchlaß beispielsweise quadratisch, so kann an jeder Seite des Quadrats ein dreieckiges Federelement befestigt werden, das in der Spitze einen rechten Winkel hat. Der Winkel kann auch etwas kleiner gewählt sein, so daß zwischen den Schenkeln der Dreiecke dann in Ruhestellung ein Durchlaßbereich definiert ist. Bei kreisförmigem Durchlaß lassen sich mit Hilfe von Federelementen mit dreieckiger Wirkfläche eine Vielzahl von Formen bilden. Die Dreiecke können auch so gestaltet sein, daß sie nicht bis ganz in die Mitte des Durchlasses reichen, so daß dort ein Durchlaßbereich definiert werden kann.

Ein erfindungsgemäßes Ventil kann alleine wirkend in der erfindungsgemäßen Vorrichtung den Durchfluß definieren. Es ist jedoch auch möglich, gleichzeitig einen Einsatz der oben beschriebenen Art und zusätzlich ein Ventil einzusetzen. Einsatz und Ventil könnten direkt miteinander verbunden sein oder mit Abstand voneinander angebracht sein (bei der Vorrichtung aus Fig. 1 im Verteilerrohr 12). Wenn der Inneneinsatz den Durchflußbereichs so definiert, wie man ihn maximal benötigt, muß das Ventil dann nur noch zwischen diesem eingeschränkten Querschnitt des Durchflusses und einem noch kleineren Querschnitt regulieren. Dadurch würde eine erhöhte Sicherheit gewährleistet, falls das Ventil ausfällt, weil durch den Einsatz bereits der Querschnitt des Durchlasses so definiert ist, daß die Vorrichtung noch betriebsfähig wäre, wenn auch nicht optimal betriebsfähig.

Die erfindungsgemäße Vorrichtung muß nicht in jedem Detail so aufgebaut sein, daß der in Figur 1 gezeigte Sonnenkollektor des Standes der Technik mit dem erfindungsgemäßen Durchfluß versehen wird. Das Absorberelement kann auch aus zwei zueinander parallelen Flächen bestehen, die am Rand und in der Mitte so dichtend verschweißt sind, daß die Einspeiseleitung und die Aufnahmeleitung und zwei miteinander verbundene Kammern gebildet werden, wobei die erste Kammer mit der Einspeiseleitung und die zweite Kammer mit der Aufnahmeleitung verbunden ist.

Die häufiger gewählte Lösung wird jedoch die sein, bei der wie in Fig. 1 eine Mehrzahl von Rohren mit verbundenem Blech als Absorberelement dienen. Diese Rohre müssen nicht unbedingt wie bei der Ausführungsform aus Fig. 1 zu einer Umlenkleitung führen, sondern sie können direkt die Einspeiseleitung zur Aufnahmeleitung führen.

Ähnlich wie in Fig. 1 kann aber auch eine erste Anzahl von Rohren von der Einspeiseleitung zu einer Umlenkleitung führen, und eine zweite Anzahl von Rohren von der Umlenkleitung zu der Aufnahmeleitung führen. Nicht immer sind jedoch die erste und die zweite Anzahl identisch. So kann die erste Anzahl eine geringere Anzahl als die zweite sein und umgekehrt. In diesem Falle würden die Rohre der Gruppe mit weniger Rohren und umgekehrt bevorzugt einen größeren Querschnitt als die Rohre der Gruppe mit mehr Rohren haben. Beispielsweise kann die erste Anzahl auch gleich eins sein, d. h. die Einspeiseleitung ist nur mit einem einzigen Rohr besonders großen Querschnitts verbunden. Dieses Rohr kann mäanderförmig gewunden sein, um eine möglichst große Fläche zu überdecken und somit möglichst viel Wärme aufzunehmen.

Es kann auch die zweite Anzahl gleich eins sein, und dieses Rohr der zweiten Gruppe kann ebenfalls mäanderförmig gewunden sein.

Die Erfindung wird anhand bevorzugter Ausführungsformen besser ersichtlich, die nachfolgend unter Bezug auf die schematischen Zeichnungen beschrieben werden. Es zeigen:
- Figur 1: einen Sonnenkollektor gemäß dem Stand der Technik,
- Figur 2: zwei hintereinander geschaltete Sonnenkollektoren gemäß dem Stand der Technik,
- Figur 3: einen Sonnenkollektor gemäß einer ersten Ausführungsform der Erfindung und
- Figur 4: zwei hintereinander geschaltete Sonnenkollektoren gemäß der ersten bevorzugten Ausführungsform
- Figur 5: zwei hintereinander geschaltete Sonnenkollektoren gemäß einer zweiten und einer dritten bevorzugten Ausführungsform der Erfindung,
- Figur 6: einen Sonnenkollektor gemäß einer vierten Ausführungsform der Erfindung,
- Figur 7: einen Sonnenkollektor gemäß einer fünften Ausführungsform der Erfindung,
- Figur 8: einen Sonnenkollektor gemäß einer sechsten Ausführungsform der Erfindung,
- Figur 9: ein Sonnenkollektorenfeld aus 4 erfindungsgemäßen Sonnenkollektoren mit einem Entleerungs- bzw. Entlüftungsanschluß,
- Figur 10: einen Sonnenkollektor gemäß einer siebten Ausführungsform der Erfindung,
- Figur 11: ein erfindungsgemäßes Ventil gemäß einer ersten Ausführungsform,
- Figur 12: das Ventil aus Figur 11 bei einer Auslenkung aus einer Ruhestellung im Querschnitt,
- Figur 13: ein erfindungsgemäßes Ventil gemäß einer zweiten Ausführungsform, und
- Figur 14: das Ventil aus Figur 13 bei einer Auslenkung aus einer Ruhestellung im Querschnitt.
- Figur 15 bis 19: verschiedene Ausführungsformen des erfindungsgemäßen Durchlasses,

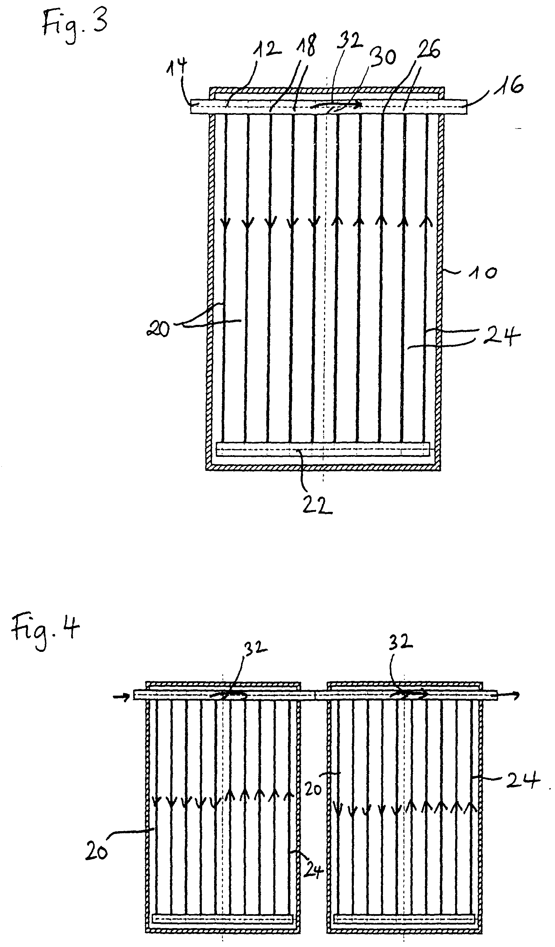

Ein erfindungsgemäßer Sonnenkollektor gemäß einer ersten Ausführungsform der Erfindung, wie sie in Figur 3 dargestellt ist, weist im wesentlichen dieselben Bauteile wie der Sonnenkollektor des oben unter Bezug auf Fig. 1 beschriebenen Standes der Technik auf. Diese Bauteile sind daher auch mit denselben Bezugszeichen bezeichnet wie in Fig. 1. Der entscheidende Unterschied besteht darin, daß nicht wie in Figur 1 eine ein Durchströmen von Flüssigkeit verhindernde Dichtung 28 vorgesehen ist, sondern ein Ventil 30, das hier geöffnet ist und einen Durchfluß 32 in der Verteilerleitung 12 freiläßt, so daß Flüssigkeit direkt von dem Flüssigkeitsabgabebereich 18 zu dem Flüssigkeitsaufnahmebereich 26 fließen kann, ohne den Umweg über die als Absorberelemente dienenden Rohre 20 und die als Absorberelemente dienenden Rohre 24. Eine Einspeiseleitung, die den in Figur 3 linken Teil der Verteilerleitung 12 mit der Eintrittsöffnung 14 und dem Flüssigkeitsabgabebereich 18 bildet, ist also über den Durchfluß 32 mit einer Aufnahmeleitung verbunden, die den in Figur 3 rechten Teil der Verteilerleitung 12 mit dem Flüssigkeitsaufnahmebereich 26 und der Austrittsöffnung 16 bildet.

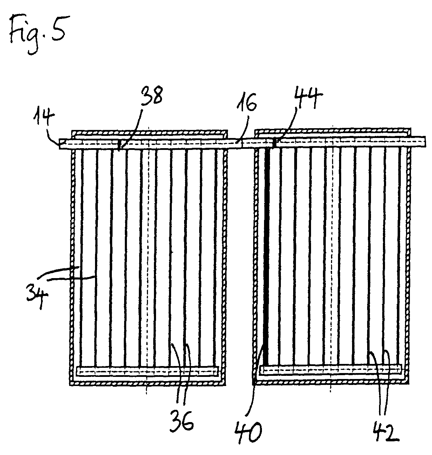

Das Ventil 30 ist in Figur 3 so dargestellt, daß es ca. 50 % des Querschnitts der ein Rohr mit konstantem Querschnitt bildenden Verteilerleitung 12 freiläßt. Diese Stellung des Ventils ist für den in Figur 4 dargestellten Fall gedacht, daß zwei Sonnenkollektoren der in Figur 3 gezeigten Art hintereinander geschaltet werden. Dann fließt die Flüssigkeit nämlich zur Hälfte durch die Rohre 20 und 24 und zur Hälfte durch die Durchlässe 32. Die Durchflußgeschwindigkeit und der Pumpendruck durch die Rohre 20 und 24 werden also nicht dadurch erhöht, daß zwei Sonnenkollektoren zu einem Kollektorenfeld verbunden und hintereinander geschaltet werden.

Die erfindungsgemäßen Sonnenkollektoren müssen nicht, wie in Fig. 3 dargestellt, symmetrisch sein. Eine nicht symmetrische zweite Ausführungsform ist in Figur 5 auf der linken Seite gezeigt. Bei dieser Ausführungsform ist anstelle von fünf Rohren 20, die zu der Umlenkleitung 22 führen und fünf Rohren 24, die von der Umlenkleitung 22 wegführen vorgesehen, daß der Flüssigkeitsabgabebereich verkürzt wird und daß nur drei Rohre 34 zur Umlenkleitung-22 führen und sieben Rohre 36 von dieser weg. Die Trennung zwischen Flüssigkeitsabgabebereich und Flüssigkeitsaufnahmebereich der Verteilerleitung erfolgt also nicht in der Mitte. Das Ventil 38 befindet sich näher an der Eintrittsöffnung 14 als an der Austrittsöffnung 16.

Man kann sogar soweit gehen, nur ein einziges zur Umlenkleitung 22 führendes Rohr 40 vorzusehen, wie dies als dritte Ausführungsform auf der rechten Seite von Figur 5 dargestellt ist. Gleichzeitig sind in Figur 5 neun von der Umlenkleitung wegführende Rohre 42 vorgesehen. Ein Ventil 44 trennt wieder den Flüssigkeitsabgabebereich, der nur eine Öffnung zu dem Rohr 40 hin hat, von dem Flüssigkeitsaufnahmebereich. Um das Ungleichgewicht, das sich aus der unterschiedlichen Zahl der Rohre ergibt, auszugleichen, weist das Rohr 40 einen deutlich größeren Querschnitt auf als die Rohre 42.

Das einzige zur Umlenkleitung führende Rohr kann, wie entsprechend einer vierten Ausführungsform in Figur 6 gezeigt, auch ein mäanderförmig ausgebildetes Rohr 46 sein. Die Mäanderform erhöht die Wirkfläche und damit die aufgenommene Wärme. Es sind hier fünf von der Umlenkleitung wegführende Rohre 50 vorgesehen. Auch in diesem Fall überbrückt ein Ventil 48 den zu dem Rohr 46 führenden Flüssigkeitsabgabebereich und den Flüssigkeitsaufnahmebereich der Verteilerleitung 12.

Gemäß einer nicht gezeigten weiteren Ausführungsform ist es auch möglich, daß nur ein einziges von der Umlenkleitung wegführendes Rohr vorgesehen ist, das dann ebenfalls mäanderförmig gewunden sein kann.

Es ist, wie entsprechend einer fünften Ausführungsform in Fig. 7 gezeigt, auch möglich, daß zwei mäanderförmige Rohre 46 und 51 vorgesehen sind. In diesem Falle kann die Umlenkleitung durch eine Verbindung 52 zwischen den beiden Rohren gebildet sein. Die Rohre 46, 51 und die Verbindung können einstückig sein.

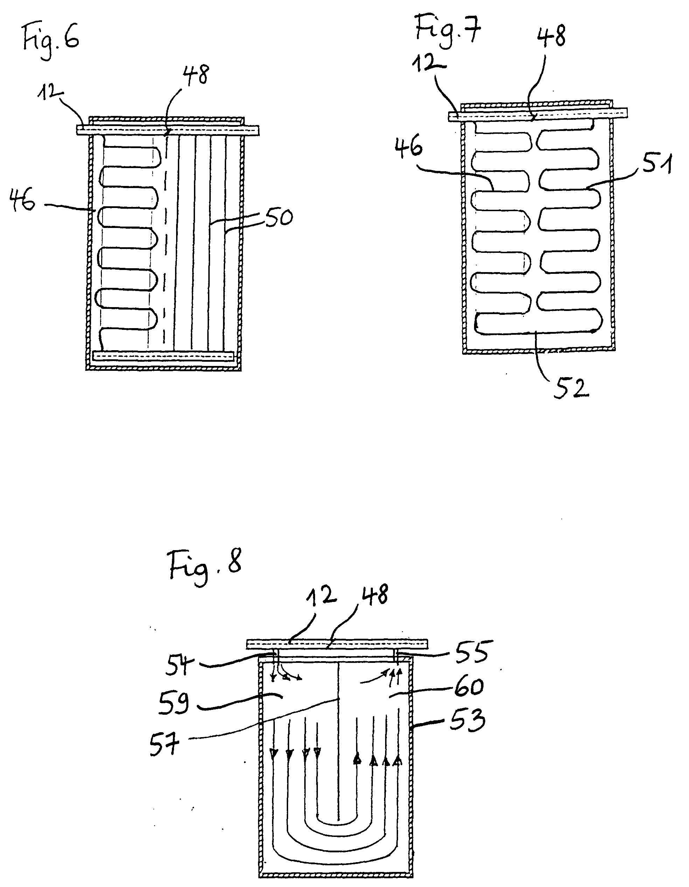

Die Erfindung kann auch bei einem sog. Vollflächenabsorber eingesetzt werden, wie er in Fig. 8 dargestellt ist. Diese Konstruktion besteht aus zwei miteinander in regelmäßigen Abständen verschweißten Flächen. An den Rändern 53 sind die beiden Bleche miteinander dichtend verschweißt, wobei eine Eintrittsöffnung 54 und eine Austrittsöffnung 55 vorgesehen sind. Die Eintrittsöffnung 54 und die Ausgangsöffnung 55 sind ferner über eine Verteilerleitung 12 außerhalb des miteinander verschweißten Bereichs verbunden, über die Flüssigkeit fließen kann, die den Vollflächenabsorber nicht durchströmen soll. Bei diesem Vollflächenabsorber ist es ebenfalls möglich, eine Teilung in zwei Hälften zu erreichen, indem eine dichte Verschweißung 57 in der Mitte senkrecht verlaufend vorgesehen wird, so daß zwei Kammern abgeteilt werden, von denen eine Kammer 59 als Eingangsabsorberelement und die andere Kammer 60 als Ausgangsabsorberelement dient. Die dichte Verschweißung 57 ist in der Mitte nicht vollständig ausgeführt, so daß der Flüssigkeitsstrom, wie durch die Pfeile angedeutet, durch die Eintrittsöffnung 54 in die Kammer 59, von dieser in die Kammer 60 und durch die Austrittsöffnung 55 laufen kann.

Alternativ kann die Verschweißung 57, was hier nicht gezeigt ist, durchgehend geführt sein, und an der den Öffnungen 54 und 55 gegenüberliegenden Seite können weitere Öffnungen vorgesehen sein, die durch eine Umlenkleitung miteinander verbunden sind.

Ferner ist es auch möglich, die Verteilerleitung 12 wegzulassen und die Verschweißung 57 auf beiden Seiten des Vollflächenabsorbers nicht vollständig auszuführen, d.h. in Fig. 8 nicht ganz bis nach oben an den Rand 53 zu führen, so daß Flüssigkeit direkt von der Eintrittsöffnung 54 zu Austrittsöffnung 55 gelangen kann, ohne daß sie die Kammern 59 und 60 durchläuft.

Bei den in den Figuren 1 bis 6 gezeigten Ausführungsformen sind die Verteilerleitung 12 und die Umlenkleitung 22 gleich groß dargestellt. Da die Umlenkleitung von weniger Flüssigkeit durchströmt wird als die Verteilerleitung 12 - durch letztere läuft die Flüssigkeit der kompletten Anlage, durch erstere nur die des betreffenden Kollektors - kann die Umlenkleitung auch wesentlich kleiner sein, d.h. eine kleineren Durchmesser aufweisen, z.B. 15mm im Vergleich zum Durchmesser der Verteilerleitung von 22mm.

In den in Figur 1 bis 8 gezeigten Ausführungsformen war die Verteilerleitung 12 immer oben angeordnet und die Umlenkleitung immer unten angeordnet. Dies ist keine notwendige Eigenschaft der Erfindung, die obere und untere Leitungen könnten auch vertauscht sein. Beide Leitungen könnten auch oben angeordnet sein. In diesem Fall müssen die Rohre einen Bogen machen, also eine U-Form aufweisen. Die Verteilerleitung und die Umlenkleitung könnten außerdem auch seitlich angeordnet sein.

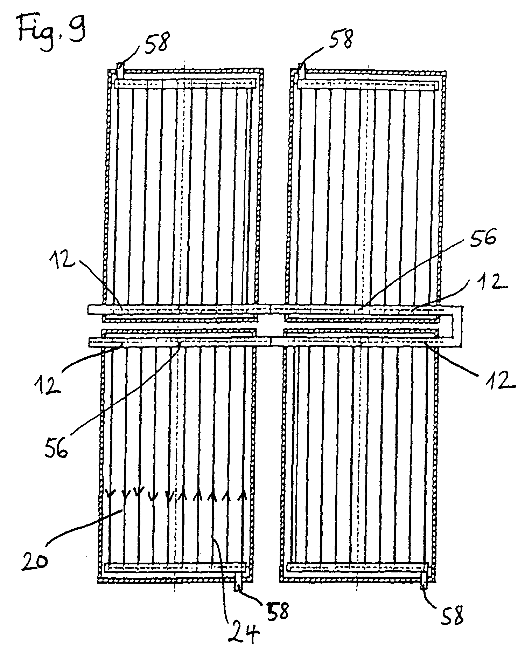

In Figur 9 ist ein Sonnenkollektorenfeld aus vier erfindungsgemäßen Sonnenkollektoren dargestellt. Wie oben bereits erwähnt sind dann die in den Verteilerleitungen 12 befindlichen Ventile so weit geöffnet, daß sich ein Durchfluß mit einem Querschnitt von etwa 3/4 des Rohrquerschnitts der Verteilerleitung 12 ergibt. In diesem Falle fließt durch die Rohre 20 und 24 der Sonnenkollektoren jeweils genauso viel Flüssigkeit wie bei einem einzelnen Sonnenkollektor des Stands der Technik gemäß Figur 1.

In Figur 9 gezeigt sind jeweils zwei Sonnenkollektoren übereinander. Zur optimalen Führung der Verteilerleitungen 12 sind die oberen Kollektoren um 180° gedreht. Die hier gezeigten Sonnenkollektoren weisen als Besonderheit Anschlüsse 58 auf. In diesen befindet sich ein Schraubventil. Wird dieses geöffnet, dienen bei den unteren Sonnenkollektoren die Anschlüsse 58 als Flüssigkeitsentleerungsanschluß. Die Anschlüsse 58 der oberen Sonnenkollektoren dienen hingegen als Entlüftungsanschluß.

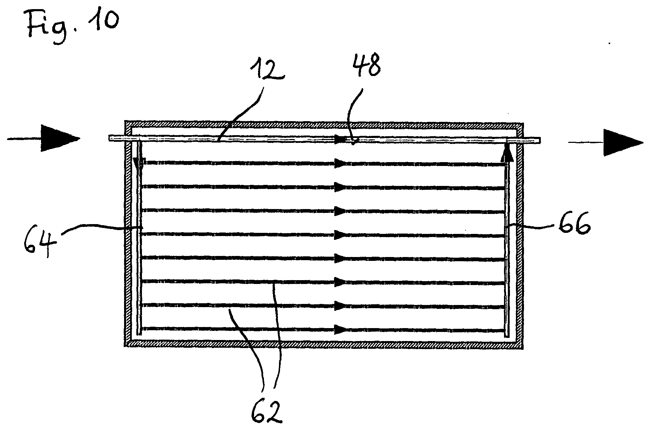

Die in den Figuren 1 bis 9 gezeigten Sonnenkollektoren werden bei den üblichen Dächern mit Neigung der Dachfläche verwendet. Fig. 10 zeigt einen Sonnenkollektor, wie er auf einem Flachdach verwendet wird. Im Unterschied zu den Kollektoren aus den Figuren 1 bis 9 ist dieser Kollektor nicht kurz und breit, sondern lang und schmal, gesehen in Richtung der Flüssigkeit, wie sie in die Verteilerleitung 12 eintritt (große Pfeile in Fig. 10). Wollte man hier Rohre, die als Absorberelemente dienen, senkrecht von der Verteilerleitung 12 abgehen lassen, so bräuchte man sehr viele Lötverbindungen. Daher sind hier Rohre 62 vorgesehen, die parallel zur Verteilerleitung laufen. Der Zufluß zu den Rohren erfolgt über eine weitere Verteilerleitung 64, der Abfluß über eine Sammelleitung 66. Auch hier ist in der Verteilerleitung 12 ein Ventil 48 vorgesehen, um die Erfindung umzusetzen.

In den Figuren 1 bis 10 hatte die Verteilerleitung 12 immer einen konstanten Querschnitt. Es kann jedoch auch vorgesehen sein, daß die Verteilerleitung an der Stelle des Ventils 48 etwas aufgeweitet ist, an dieser Stelle also einen höheren Rohrquerschnitt hat. Werden bei verschiedenen Sonnenkollektoren Verteilerleitungen mit verschiedenem Querschnitt verwendet, so kann dann immer dasselbe Ventil verwendet werden, wenn die Verteilerleitungen an der Stelle des Ventils immer auf denselben Querschnitt aufgeweitet werden.

Das bei den in den Figuren 1 bis 10 gezeigten Ausführungsformen verwendete Ventil 48 dient dazu, den Durchfluß, je nachdem, ob der Sonnenkollektor alleine oder in Hintereinanderschaltung mit einem, zweien oder mehreren Sonnenkollektoren verwendet werden soll, optimal einzustellen. Es kann ein herkömmliches Ventil verwendet werden. Vorteilhaft kann es stufenlos geöffnet und geschlossen werden, so daß nicht verschiedene Sonnenkollektoren für verschiedene Zwecke gebaut werden müssen. Ferner ermöglicht es vorteilhaft nicht nur ein Fließen der Flüssigkeit in eine Richtung, sondern auch in die Rückrichtung.

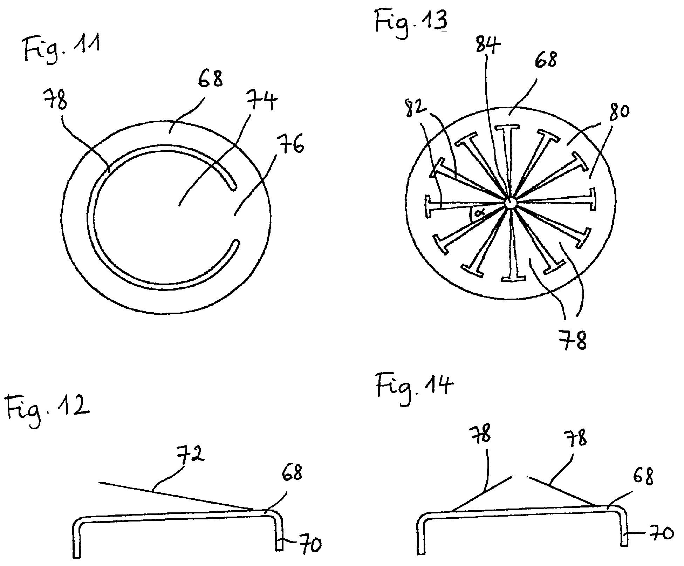

Teil der Erfindung ist auch ein neuartiges Ventil, das in der erfindungsgemäßen Vorrichtung verwendet werden kann. Fig. 11 zeigt eine erste Ausführungsform des erfindungsgemäßen Ventils. Das Ventil besteht im wesentlichen aus einem Randteil 68, das hier ringförmig ist, nämlich eine kreisförmige Außenkontur hat und somit in ein kreisförmiges Rohr von derart der Verteilerleitung 12 eingepaßt werden kann und andererseits einen kreisförmigen Durchlaß definiert. Wie in Fig. 12, die das Ventil aus Fig. 11 im Querschnitt zeigt, zu sehen, umfaßt das Randteil 68 einen umlaufenden Steg 70, der die Befestigung des Ventils in einer Fluidleitung erleichtert. An dem Randteil 68 ist ein Federelement 72 befestigt. Das Federelement 72 besteht aus einer kreisförmigen Wirkfläche 74, die über einen Hals 76 mit dem Randteil 78 verbunden ist. Die Wirkfläche ist also an die Form des vom Randteil 68 gebildeten kreisförmigen Durchlasses angepaßt. Hier ist sie allerdings etwas kleiner als der Durchlaß. Bei der in Fig. 11 gezeigten Ruhestellung verbleibt somit eine Öffnung 78, durch die eine erste, von Null verschiedene Strömungsquerschnittsfläche definiert wird. Das Ventil ist hier einstückig, d.h. Federelement und Randteil bestehen aus dem selben Material, beispielsweise aus Metall, Kunststoff, aber eventuell auch aus Gummi. Notwendig ist, daß das Material elastisch ist. Die Öffnung 78 erlaubt ein Durchströmen von Fluid. Erhöht sich jedoch die Menge des Fluids, so wirkt das Fluid auf die Wirkfläche 74 ein und lenkt das Federelement 72 aus, wobei der Hals 76 die Rolle eines "Scharniers" hat und die elastischen Eigenschaften des Materials dafür sorgen, daß der Hals ein elastisches Rückfedern des Federelements 72 bewirkt, wenn der Fluiddruck wieder nachläßt. In Fig. 12 ist das Federelement 72 in einer ausgelenkten Stellung dargestellt, in der die durch das Ventil definierte Strömungsquerschnittsfläche gegenüber der von der Öffnung 78 definierten Strömungsquerschnittsfläche erhöht ist. Es kann somit mehr Fluid durch das Ventil strömen. Durch die elastischen Eigenschaften des Federelements wird irgendwann eine End-Auslenkstellung erreicht. Zwischen der in Fig. 11 gezeigten Ruhestellung und dieser End-Auslenkstellung ist das Federelement unter Fluiddruck in jede mögliche Zwischenstellung bewegbar.

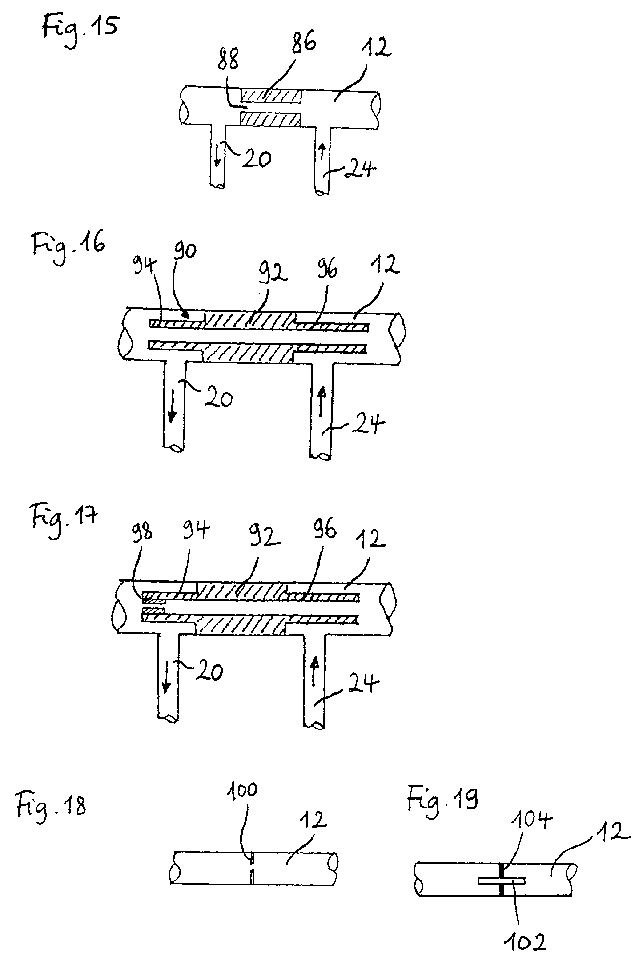

Eine weitere Ausführungsform eines erfindungsgemäßen Ventils ist in Fig. 13 dargestellt. Auch dieses Ventil umfaßt ein Randteil 68, das in gleicher Weise wie bei dem Ventil aus den Figuren 11 und 12 gebildet ist. Anstelle eines einzigen Federelements sind hier mehrere Federelemente 78 vorgesehen. Dargestellt sind hier 12 Federelemente, ihre Anzahl kann jedoch je nach Bedarf angepaßt werden. Die Federelemente 78 weisen eine dreieckige Wirkfläche auf. Die Basis des Dreiecks ist dabei leicht konvex gewölbt, um sich an die Kreisform des von dem Randteil definierten Durchlasses anzupassen. Die Federelemente 78 sind über Hälse 80 mit dem Randteil 68 verbunden. Diese Hälse sind etwas schmäler als die Basis der Dreiecke. Je schmäler die Hälse ausgelegt werden, desto leichter federt das Federelement aus seiner Ruhestellung heraus. Die Hälse 80 sind im gleichen Winkelabstand voneinander angeordnet, d.h. die Federelemente sind gleichförmig über den kreisförmigen Durchlaß verteilt. Damit die Federelemente 78 nicht überlappen, darf der Winkel α, in der Spitze der dreieckigen Wirkflächen nicht größer sein als 360° geteilt durch die Anzahl der Federelemente 78 sein, vorliegend also nicht größer als 30°. Bei der in Fig. 13 gezeigten Ausführungsform ist der Winkel α deutlich kleiner als 30°, so daß zwischen benachbarten Federelementen 78 jeweils ein Durchlaßbereich 82 definiert wird. Da die Hälse 80 schmäler sind als Basis der dreieckigen Wirkflächen, erweitert sich dieser Durchlaßbereich 82 zum Randteil 68 hin, so daß sich die Form eines nach unten spitz zulaufenden T's ergibt.

Die Spitzen der Dreiecke weisen zueinander, schließen den Durchlaß jedoch in der Mitte nicht völlig, sondern definieren zwischen sich einen kreisförmigen Durchlaßbereich 84.

Fig. 14 zeigt das Ventil aus Fig. 13 in einem Zustand, in dem die Federelemente aus der Ruhestellung heraus ausgelenkt sind. Die Verwendung von mehreren kleineren Federelementen hat den Vorteil, daß ein Defekt an einem der Federelemente die Funktionsweise des Ventils im wesentlichen nicht stark beeinträchtigt.

Sowohl das Ventil aus den Figuren 11 und 12, als auch das Ventil aus den Figuren 13 und 14 werden in die entsprechende Fluidleitung entweder eingepreßt, geschraubt, gelötet, geklebt oder geklemmt.

Durch die Gestaltung der Federelemente sind diese Ventile sehr betriebssicher: sie können durch Schmutz nicht verstopfen, denn ein Einsetzen von Schmutz bewirkt lediglich ein stärkeres Öffnen der Federelemente. Ein erfindungsgemäßer Sonnenkollektor, der mit einem derartigen Ventil versehen ist, ist flexibel einsetzbar und kann mit einer nahezu beliebigen Anzahl von anderen Sonnenkollektoren verbunden werden: je größer das Kollektorfeld ist, um so größer wird der Pumpendruck, und um so größer wird die Auslenkung der Federelemente und damit die Öffnung des Ventils, was schließlich zur Folge hat, daß um so mehr Flüssigkeit durchfließt, je mehr Kollektoren hintereinander geschaltet werden.

Die erfindungsgemäßen Ventile können je nach Art der Fluidleitungen, in die sie eingesetzt werden sollen, auch andere Formen haben, z.B. eine rechteckige, insbesondere quadratische Außenkontur aufweisen.

Ein Durchfluß läßt sich in einem Sonnenkollektor (z.B. gemäß den Figuren 1-10) auch auf alternative Weise bilden, nämlich durch das Vorsehen eines Einsatzes in der Verteilerleitung 12. Verschiedene Ausführungsformen eines derartigen Einsatzes sind in den Figuren 15 bis 19 gezeigt.

Ein Einsatz 86, wie er in Fig. 15 gezeigt ist, kann beispielsweise aus einem dickwandigen Rohr bestehen, wobei die dicken Wände.den Durchfluß verringern und nur eine Öffnung 88 des Rohrs den Durchlaß bestimmt.

Je länger der Einsatz 86 ist, desto größer wird der Durchfluß widerstand, und desto größer kann die Öffnung 88 ausgelegt werden, was von Vorteil ist, damit die Öffnung nicht zu schnell durch Schmutz verstopft werden kann. Eine natürliche Grenze für die Verlängerung ergibt sich jedoch daraus, daß ein verlängerter Einsatz 86 den Zufluß in ein Rohr 20 verhindern würde bzw. den Abfluß aus einem Rohr 24.

In Fig. 16 ist ein Einsatz 90 dargestellt, mit dem dieses Problem gelöst werden kann: an ein Teil 92, das im wesentlichen wie der Einsatz 86 ein dickwandiges Rohr ist, dessen Außendurchmesser genau in die Verteilerleitung 12 paßt, sind auf beiden Seiten dünnerwandige Rohre 94 und 96 angesetzt, die den selben Öffnungsquerschnitt wie das Teil 92 haben. Die Rohre 94 und 96 sind einstückig mit dem Teil 92 ausgebildet und ragen in den Bereich über die Rohre 20 bzw. 24. Da sie aber dünnwandiger sind als das Teil 92, verhindern sie den Zufluß zum Rohr 20 bzw. den Abfluß vom Rohr 24 nicht.

Die Ausführungsformen aus Figuren 15 und 16 haben ein festen Querschnitt des Durchlasses, wodurch zwar ein einfacher Aufbau ergibt, andererseits aber der zugehörige Sonnenkollektor nicht mit beliebigen Anzahlen von anderen Sonnenkollektoren verbunden werden kann. Für eine flexiblere Gestaltung kann eine einfache Zusatzvorrichtung sorgen, nämlich ein in eines der Rohre 94 und 96 einpaßbares Reduzierstück. In Fig. 17 ist ein derartiges Reduzierstück 98 gezeigt, das ebenfalls rohrförmig ist und genau in das Rohr 94 einpaßbar ist. Beispielsweise kann das Rohr 94 ein Schraubgewinde und das Rohr 98 ein diesem entsprechendes Schraubgewinde aufweisen, so daß das Reduzierstück 98 in der Baustelle kurzfristig und schnell eingeschraubt werden kann.

Eine besonders einfache Ausführungsform ist in Fig. 18 gezeigt: hier ist in die Verteilerleitung 12 nur eine schmale Scheibe 100 eingebaut.

Eine weitere Ausführungsform ist Fig. 19 zu entnehmen: der Einsatz besteht hier aus einem Innenrohr 102, das mittels einer Dichtung 104 in der als Rohr gestalteten Verteilerleitung 12 angeordnet ist.

Bei den Ausführungsformen des Einsatzes aus den Figuren 15 bis 19 ist der nominelle Durchflußquerschnitt eindeutig festgelegt. Auf den ersten Blick scheint ein Sonnenkollektor mit einem derartigen Einsatz also nur in einer Anordnung mit einer ganz bestimmten Menge von Sonnenkollektoren verwendet werden zu können. Der Einsatz kann jedoch durch mehrere konstruktive Maßnahmen so gestaltet sein, daß Fluid in unterschiedlicher Menge durch den Durchfluß fließen kann, wobei der Einsatz je nach Pumpendruck eine unterschiedliche Durchflußmenge erlaubt. Beispielsweise kann man das Material des Einsatzes geeignet wählen, oder es kann auch die Oberfläche des Einsatzes eine geeignete Struktur erhalten (z. B. mit Vertiefungen wie bei einem Golfball). Zusätzlich kann bei dem in den Figuren 15 bis 19 gezeigten Ausführungsformen beim Ein- und Austritt in den Einsatz eine Trichterform vorgesehen sein, ferner können im Innern des Einsatzes anstelle eines Rohrs mit durchgehendem Querschnitt plötzliche oder allmähliche Querschnittsverengungen oder -erweiterungen vorgesehen sein. Es kann ein Venturi-Rohr eingebaut sein. Auch kann der Ein- und Austritt in den Einsatz scharfkantig gestaltet sein etc. Dadurch kann die Entwicklung von Druckverlusten in den Einsätzen in Abhängigkeit von dem Pumpdruck durch die Konstruktion vorgegeben sein, wodurch die Durchflußmenge in Abhängigkeit vom Pumpdruck vorgegeben ist. Dies erlaubt es, einen erfindungsgemäßen Sonnenkollektor mit einem derartigen Einsatz in Anordnungen mit unterschiedlichen Zahlen von Sonnenkollektoren zu verwenden.

Ein Sonnenkollektor mit einem Einsatz der in den Figuren 15 bis 19 gezeigten Art kann außerdem zusätzlich mit einem Ventil versehen sein, beispielsweise mit einem Ventil der in den Figuren 11 bis 14 gezeigten Art. Der Einsatz sorgt dann für eine erste Einschränkung des Durchflusses, und das Ventil regelt dann den Durchfluß weiter. Dies hat den Vorteil, daß das Ventil keine Regelung über den gesamten Querschnitt der Verteilerleitung 12 durchführen muß.

Die erfindungsgemäße Vorrichtung kann anstelle als Sonnenkollektor auch als System zum Kühlen eines fluiden Mediums z.B. von Dämpfen eingesetzt werden. Der Aufbau unterscheidet sich in diesem Fall nicht wesentlich von den oben beschriebenen Ausführungsformen. Die Absorberelemente fungieren jedoch dann als Radiatorelemente zur Abstrahlung von Wärme.

## Patentansprüche

1. Vorrichtung zum Erwärmen oder Kühlen eines fluiden Mediums, insbesondere Sonnenkollektor, mit
a) mindestens einem Absorber-/Radiatorelement (20, 24),
b) einer Einspeiseleitung (14, 18) zum Einspeisen des fluiden Mediums in das mindestens eine Absorber-/Radiatorelement (20, 24) und
c) einer stromabwärts hinter dem mindestens einen Absorber-/Radiatorelement (20, 24) angeordneten Aufnahmeleitung (26, 16) zum Aufnehmen des durch das mindestens eine Absorber-/Radiatorelement geleiteten fluiden Mediums,
**dadurch gekennzeichnet, daß** zwischen der Einspeiseleitung (14, 18) und der Aufnahmeleitung (26, 16) ein Durchfluß vorhanden ist mit einem Querschnitt der Art, daß ein bestimmter Anteil des fluiden Mediums direkt ohne den Umweg über das Absorber-/Radiatorelement (20, 24) von der Einspeiseleitung (14, 18) zur Aufnahmeleitung (14, 18) geleitet wird.

2. Vorrichtung nach Anspruch 1,
**dadurch gekennzeichnet, daß** der Durchfluß einen Querschnitt von wenigstens 10 %, bevorzugt von wenigstens 20 %, weiter bevorzugt von wenigstens 30 %, weiter bevorzugt von wenigstens 40 % des durchschnittlichen Querschnitts der Einspeiseleitung (14, 18) und/oder der Aufnahmeleitung (26, 16) aufweist.

3. Vorrichtung nach Anspruch 1 oder 2,
**dadurch gekennzeichnet, daß** die Einspeiseleitung (14, 18) und/oder die Aufnahmeleitung (26, 16) ein durchgehendes Rohr (12) mit im wesentlichen konstantem Rohrquerschnitt sind.

4. Vorrichtung nach einem der vorhergehenden Ansprüche,
**dadurch gekennzeichnet, daß** im Bereich des Durchflusses (32) ein Ventil (30) angeordnet ist.

5. Vorrichtung nach Anspruch 4,
**dadurch gekennzeichnet, daß** der Querschnitt des Durchflusses (32) mittels des Ventils (30) in Stufen oder stufenlos gesteuert werden kann.

6. Vorrichtung nach Anspruch 4 oder 5,
**dadurch gekennzeichnet, daß** das Ventil so gestaltet ist, daß es durch den Druck der Flüssigkeit gesteuert wird.

7. Vorrichtung nach Anspruch 3,
**dadurch gekennzeichnet, daß** der Durchfluß durch einen in dem durchgehenden Rohr (12) angeordneten Inneneinsatz gebildet wird.

8. Vorrichtung nach einem der vorhergehenden Ansprüche,
**dadurch gekennzeichnet, daß** eine Mehrzahl von Rohren (20, 24) mit aufgeschweißtem, aufgelötetem, aufgeklebtem oder aufgepreßtem Blech oder Alu-Profil als Absorber-/Radiatorelemente dienen.

9. Vorrichtung nach Anspruch 8,
**dadurch gekennzeichnet, daß** die Rohre direkt von der Einspeiseleitung (14, 18) zu der Aufnahmeleitung (16, 26) führen.

10. Vorrichtung nach Anspruch 8,
**dadurch gekennzeichnet, daß** eine erste Anzahl von Rohren (20) von der Einspeiseleitung (14, 18) zu einer Umlenkleitung (22) führt, und daß eine zweite Anzahl von Rohren (24) von der Umlenkleitung (22) zu der Aufnahmeleitung (26, 16) führt.

11. Vorrichtung nach Anspruch 10,
**dadurch gekennzeichnet, daß** die eine Anzahl der ersten und zweiten Anzahl eine geringere Anzahl als die andere Anzahl ist, wobei die Absorber-/Radiatorelemente (34, 40) der einen Anzahl einen größeren Querschnitt als die Absorber-/Radiatorelemente (36, 42) der anderen Anzahl haben.

12. Vorrichtung nach Anspruch 10 oder 11,
**dadurch gekennzeichnet, daß** die eine Anzahl gleich eins ist.

13. Vorrichtung nach Anspruch 12,
**dadurch gekennzeichnet, daß** das Rohr (46) der einen Anzahl mäanderförmig gewunden ist.

14. Vorrichtung nach Anspruch 10,
**dadurch gekennzeichnet, daß** die erste und die Anzahl gleich eins sind, und daß das Rohr (46) der ersten Anzahl und das Rohr (51) der zweiten Anzahl mäanderförmig gewunden sind, wobei die Umlenkleitung durch eine direkte Verbindung zwischen den beiden Rohren gebildet ist.

15. Vorrichtung (Fig. 10) nach Anspruch 8 mit den Merkmalen von Anspruch 3,
**dadurch gekennzeichnet, daß** die Einspeiseleitung eine von dem durchgehenden Rohr (12) wegführende Verteilerleitung (64) aufweist, und daß die Aufnahmeleitung ein von dem durchgehenden Rohr (12) wegführende Sammelleitung aufweist, und wobei die Mehrzahl von Rohren (62), die als Absorber-/Radiatorelemente dienen, die Verteilerleitung (64) mit der Sammelleitung (66) verbinden.

16. Vorrichtung nach einem der Ansprüche 1 bis 9,
**dadurch gekennzeichnet, daß**
das Absorber-/Radiatorelement aus zwei Flächen besteht, die am Rand und in der Mitte so dichtend miteinander verbunden sind, daß die Einspeiseleitung und die Aufnahmeleitung und zwei miteinander verbundene Kammern gebildet werden, wobei die erste Kammer mit dem Flüssigkeitsabgabebereich der Verteilerleitung und die zweite Kammer mit dem Flüssigkeitsaufnahmebereich der Verteilerleitung verbunden ist.

17. Anordnung aus mehreren in Reihe miteinander verbundenen Vorrichtungen nach einem der Ansprüche 1 bis 16, bei der jeweils die Aufnahmeleitung einer vorangehenden Vorrichtung mit der Einspeiseleitung einer nachfolgenden Vorrichtung verbunden ist.

18. Anordnung nach Anspruch 17,
bei der n Vorrichtungen in Reihe angeordnet sind und der Durchfluß in jeder Vorrichtung einen Querschnitt von ungefähr n/n-1 des durchschnittlichen Querschnitts der zugehörigen Einspeiseleitung und/oder der zugehörigen Aufnahmeleitung aufweist.

19. Ventil (Fig. 11 bis Fig. 14) zum Einsatz in einer Fluidleitung (12), insbesondere in einem Sonnenkollektor, mit
- einem Randteil (68), das einen Durchlaß definiert, und
- mindestens einem Federelement (72, 78) das
a) in einer Ruhestellung (Fig. 11, Fig. 13) den Durchlaß zumindest teilweise verschließt und so eine erste Strömungsquerschnittsfläche (78; 82, 84) definiert und
b) in einer Auslenkstellung den Durchlaß weniger verschließt als in der Ruhestellung und so eine zweite Strömungsquerschnittsfläche definiert, die größer als die erste Strömungsquerschnittsfläche ist,
wobei das Federelement (72, 78) unter Fluiddruck in mehrere Stellungen (Fig. 12, Fig. 14) zwischen der Ruhestellung (Fig. 11, Fig. 13) und der Auslenkstellung bewegbar ist, so daß beim Betrieb des Ventils Strömungsquerschnittsflächen zwischen den ersten und der zweiten Strömungsquerschnittsfläche auftreten können.

20. Ventil nach Anspruch 19,
**dadurch gekennzeichnet, daß** das Federelement (72, 78) unter Fluiddruck stufenlos in alle Stellungen zwischen der Ruhestellung und der Auslenkstellung bewegbar ist, so daß beim Betrieb des Ventils sämtliche Strömungsquerschnittsflächen zwischen der ersten und der zweiten Strömungsquerschnittsfläche auftreten können.

21. Ventil nach Anspruch 20,
**dadurch gekennzeichnet, daß** die erste Strömungsquerschnittsfläche (78; 82, 84) von Null verschieden ist.

22. Ventil nach einem der Ansprüche 19 bis 21,
**dadurch gekennzeichnet, daß** jedes Federelement (72, 78) am Randteil (68) befestigt ist.

23. Ventil nach Anspruch 22,
**dadurch gekennzeichnet, daß** jedes Federelement (72, 78) mit dem Randteil (68) einstückig ist.

24. Ventil nach Anspruch 22 oder 23,
**dadurch gekennzeichnet, daß** jedes Federelement (72, 78) eine Wirkfläche (74) hat, die über einen Hals (76, 80) mit dem Randteil (68) verbunden ist.

25. Ventil nach Anspruch 24,
**gekennzeichnet durch** ein einziges Federelement (72), dessen Wirkfläche (74) im wesentlichen eine an die Form des Durchlasses angepaßte Form hat, wobei Durchlaß und Wirkfläche (74) vorzugsweise kreisförmig sind.

26. Vorrichtung nach Anspruch 24,
**gekennzeichnet durch** eine Vielzahl von Federelementen (78, vorzugsweise 8 bis 15), besonders bevorzugt 12 Federelementen, mit im wesentlichen dreieckiger Wirkfläche, wobei vorzugsweise der Durchlaß kreisförmig ist und die Hälse (80) der Federelemente in äquidistanter Anordnung mit dem Randteil (68) verbunden sind.

27. Ventil nach Anspruch 26,
**dadurch gekennzeichnet, daß** die Wirkflächen in der Ruhestellung (Fig. 13) so angeordnet sind, daß die Spitzen der Dreiecke zueinander weisen und zwischen sich einen Durchlaßbereich (84) definieren, der vorzugsweise kreisförmig ist.

28. Ventil nach Anspruch 26 oder 27,
**dadurch gekennzeichnet, daß** die Wirkflächen der Federelemente (78) sich außerhalb eines möglichen Kontaktbereichs an der Spitze der Dreiecke nicht berühren, so daß in der Ruhestellung (Fig. 13) zwischen den Schenkeln der Dreiecke ein Durchlaßbereich (82) definiert ist.

29. Ventil nach Anspruch 26' bis 28,
**dadurch gekennzeichnet, daß** der Hals (80) schmäler als die Basis der Dreiecke ist.

30. Ventil nach einem der Ansprüche 19 bis 29,
**dadurch gekennzeichnet, daß** das Federelement aus elastischem Material, insbesondere Gummi besteht.

31. Ventil nach Anspruch 23,
**dadurch gekennzeichnet, daß** das Ventil ausgestanzt ist, insbesondere aus Metall, Kunststoff oder Gummi.

32. Vorrichtung nach Anspruch 6 mit einem Ventil nach einem der Ansprüche 19 bis 31.
